# EUROPÄISCHE PATENTANMELDUNG

(11) **EP 1 970 021 A1**
(43) Veröffentlichungstag der Anmeldung: **17.09.2008**
(21) Anmeldenummer: 08002451.6
(22) Anmeldetag: 11.02.2008
(51) Int. Cl.: A61C 1/14

(54) **Dentales Instrument**

(30) Priorität: 14.03.2007 DE 102007012952; 12.05.2007 DE 102007022295
(71) Anmelder: Heraeus Kulzer GmbH, 63450 Hanau (DE)
(72) Erfinder: Reimers, Jan-Dirk, 52068 Aachen (DE)
(74) Vertreter: Kühn, Hans-Christian

(57) **Zusammenfassung**

Die Erfindung betrifft eine dentale Winkelschaftaufnahme (14) zum Betrieb von dentalen, rotierenden Instrumenten mit Winkelschaft (1), wobei die Winkelschaftaufnahme (14) einen Mitnehmerbolzen (18) aufweist und der Mitnehmerbolzen (18) der Winkelschaftaufnahme (14) bei Betrieb durch einen flächigen Kontakt mit dem Winkelschaft (1) des dentalen Instrumentes verbunden.

## Beschreibung

Dentale Instrumente aller Art, die für die Verwendung als rotierende Instrumente in einem Winkelstück, auch als Winkelschaftaufnahme denkbar, vorgesehen sind, haben einen speziell geformten Schaft, genannt Winkelstückanschluss oder auch Winkelschaft. Dieser Anschluss ist für die rotierenden Werkzeuge genormt und wird weltweit in vorgegebenen Maßen und Toleranzen hergestellt. Er gilt gleichermaßen für Werkzeuge mit hohen Drehzahlen und geringen Drehmomenten und hohen Drehmomenten und geringen Drehzahlen wie beispielsweise Bohrer, Erweiterer, Fräsaufsätze, Gewindeschneider, Kopfsenker, Insertionsinstrumente von Implantaten, etc.

Die rotierenden Werkzeuge können mit dieser Art von Anschluss sowohl in motorisch betriebene Winkelstücke, aber auch in manuell betätigte Griffstücke oder Adapter gesteckt und benutzt werden. Der Winkelschaft ist eine entscheidende Schnittstelle für den Gebrauch von nahezu allen Arten von dentalen Werkzeugen.

Diese bekannte Vereinbarung zur konstruktiven Gestaltung des Kraft übertragenden Anschlusses am Schaft des Instrumentes (z.B. Bohrer) berücksichtigt nicht die heute möglichen und stellenweise notwendigen Drehmomente des dentalen Instrumentariums. Das Gegenstück für die Kraftübertragung im Adapter oder Winkelstück ist oftmals nicht in der Lage einen optimalen Kraftübertrag zu gewährleisten, es berücksichtigt ebenfalls nicht die modernen Anforderungen an höhere Drehmomente. Für Winkelstücke werden zumeist einfache Bleche ausgestanzt, um einen Gegenkontur für den Winkelschaft zu erhalten. Diese Bleche dienen dann als Drehmomentmitnehmer und übertragen über einen Kontaktbereich zum Schaft das Drehmoment. Für Winkelstücke in Form von Handadaptern oder Schaftverlängerungen werden zumeist Bolzen mit einem Mitnehmerfinger gedreht, die dann ebenfalls über eine berührende Fläche die Kraft auf den Schaft übertragen. Alle diese Kraft übertragenden Flächen sind derart geformt, dass es zu einer linienförmigen Kontaktfläche zwischen den beiden Teilen kommt.

Es hat sich gezeigt, dass bei hohen Drehmomenten das dentale Instrument oder das Winkelstück, oder beides geschädigt wird. Es kann zum Verklemmen der beiden Bauteile, oder zur Zerstörung eines Teils der Baugruppe kommen. Dies wird durch eine derzeit genutzte linienförmige Berührung der Teile gefördert, da diese bei hohen Kräften plastisch verformt werden.

Die Toleranzen zwischen dem Winkelschaft und dem Mitnehmerbolzen des Winkelstücks führen immer zu einer Verdrehung zwischen den beiden Kraft übertragenden Flächen. Diese ist entsprechend der Toleranzen der beiden Bauteile mehr oder minder groß und führt zu einem mehr oder minder großen Winkeldifferenz der beiden Kraft übertragenden Flächen. Dies führt dazu, dass die beiden Flächen nur in einer Linienberührung am äußeren Rand des Schaftes Kontakt zueinander bekommen. Diese linienförmige Kontaktfläche am Winkelschaftaussenrand wird gemäß den berechenbaren Regeln der hertzschen Pressung so lange plastisch verformt und bildet neu geformte Kontaktflächen aus, bis der durch die Kraftübertragung gebildete Flächendruck die plastische Verformungsgrenze Rp 0,2 unterschreitet. Mit den unter Umständen notwendigen Drehmomenten für die Versorgung mit Implantaten, oder das vorschriftsmäßige Anziehen von prothetischen Schrauben mit einem vom Hersteller vorgeschriebenem minimalem Drehmoment werden Kraftniveaus erreicht, die in der heutigen konstruktiven Lösung der Kontaktfläche zu einer deutlichen Belastung oberhalb der plastischen Verformungsgrenze der üblichen Werkstoffe für rotierende Werkzeuge führt. Es bilden sich deutliche und bleibende Verformungen in Form von Fasen und Gratbildung an den Kraft übertragenden Flächen außen am Schaftrand aus.

Durch das Ausbilden von diesen Verformungsflächen kann es zu Veränderungen im Durchmesser der Schaftgeometrie kommen, so dass das Instrument im Winkelstück verklemmt oder eine schädigende Rückkopplung auf die Konstruktion des Winkelstückes entsteht. Die Verformung des Winkelschaftes kann also zum Funktionsversagen des Anschlusses führen.

Ein wirtschaftlich wenig sinnvoller Weg ist es, die Fertigungstoleranzen zu verkleinern. Jedoch ist es nach den derzeitigen technischen Lösungen die einzige Möglichkeit diesen Effekt zu minimieren. Weiterhin kann die Verwendung von höherfesten Werkstoffen mit einer gesteigerten Dehngrenze den Effekt der Verformung zu höheren Drehmomenten hin verschieben. Ebenfalls ein fertigungstechnisch unwirtschaftlicher Weg, da die Produktion der dentalen Werkzeuge Prinzip bedingt aufwändiger wird. Eine konstruktive Veränderung ist aufgrund der jahrzehntelangen Normung der Winkelschaftmaße zumindest für die Schaftanschlüsse nicht marktgerecht. Ziel muss es sein mit Änderungen an der Konstruktion des Winkelstücks und dessen Geometrie des Mitnehmerbolzens eine Verbesserung zu erzielen.

Aufgabe der Erfindung ist es daher, eine Winkelschaftaufnahme zum Betrieb von dentalen Instrumenten bzw. Winkelschaft in einem Winkelstück oder Handadapter bereitzustellen, welches eine verbesserte Übertragung von Drehmomenten ermöglicht.

Diese Aufgabe wird bereits mit den Merkmalen des unabhängigen Anspruchs gelöst.

Vorteilhafte Weiterbildungen sind den jeweiligen Unteransprüchen zu entnehmen.

Die erfindungsgemäße dentale Winkelschaftaufnahme eines Winkelstücks für dentale, rotierende Instrumente , wobei die Winkelschaftaufnahme einen Mitnehmerbolzen aufweist, sieht vor, dass der Mitnehmerbolzen und der Winkelschaft in der Winkelschaftaufnahme immer durch einen flächigen Kontakt bei Betrieb des Winkelstücks verbunden sind.

Dadurch erfolgt eine konstruktive Veränderung nur an der Winkelschaftaufnahme (Winkelstück), bei der die gültige Norm zur Fertigung von dentalen Instrumenten bzw. deren Winkelschaftgeometrie vollständig berücksichtigt bleibt. Es wird dadurch die Übertragung von deutlich höheren Drehmomenten schädigungsfrei ermöglicht. Die Möglichkeiten zur Nutzung dieses universalen Verbindungssystems der dentalen Werkzeuge wird dadurch deutlich gesteigert und deutlich sicherer im Gebrauch gemacht.

Vorteilhafterweise wird das Winkelstück motorisch oder manuell betrieben.

Eine vorteilhafte Ausgestaltung der Erfindung sieht vor, dass der flächige Kontakt, der durch den Mitnehmer der Winkelschaftaufnahme mit dem Winkelschaft gebildet wird und für die Kraftübertragung notwendig ist, nur Verformungen der Kontaktflächen im hookschen Bereich erzeugt. Die Verformungen der Kontaktflächen sind damit rein elastisch, der Werkstoff unterliegt damit keiner plastischen Verformung.

Der flächige Kontakt muss derart ausgeführt sein, dass bei allen entstehenden Toleranzpaarungen eine Fläche entsteht, die das Kriterium erfüllt:
δ **Kontaktfläche** ≤ **Rp 0,2.**

Zur Feststellung dieser Bedingung gelten die Grundlagen der hertzschen Pressung. Diese Grundlagen erlauben eine Berechnung von diversen geometrischen Körperkontakten und erlauben es die im Werkstoff entstehenden Flächenpressungen abzuschätzen. Ein Werkstoff, der unterhalb der plastischen Verformungsgrenze belastet wird, wird nur reversibel, bzw. elastisch Verformt und wird nach Belastung wieder seine Ausgangsform annehmen.
So kann unabhängig von den Fertigungstoleranzen immer eine gleichmäßig schadensfrei funktionierende Einheit bereitgestellt werden.

Vorteilhafterweise besitzt der Mitnehmerbolzen an der kraftübertragenden Fläche einen konstanten Radius.

In einer bevorzugten Ausführungsform sieht die Erfindung vor, dass der Mitnehmerbolzen an der kraftübertragenden Fläche einen variablen Radius besitzt. Dieser variable Radius kann einen speziellen funktionalen Zusammenhang besitzen.

Es hat sich gezeigt, dass es vorteilhaft ist, wenn der Mitnehmerbolzen an der kraftübertragenden Fläche eine Kombination aus Flächen und Radien variabler Art aufweist.

Erfindungsgemäß soll der Mitnehmer der Winkelschaftaufnahme (Winkelstück) derart geformt werden, dass die Kontaktstelle unabhängig zu den Toleranzen der Bauteile immer aus der ebenen Fläche des Winkelschaftes und einer gekrümmten Fläche des Mitnehmers der Aufnahme besteht.

Vorteilhafterweise ist an der Gegenseite zum Mitnehmerbolzen ein abstützendes Gegenlager vorhanden.

Die Erfindung wird nachfolgend anhand einer bevorzugten Ausführungsform und unter Bezugnahme der beigefügten Figuren näher erläutert.

Dabei zeigt in schematischer Darstellung:
Figur 1:
   Winkelschaft gemäß dem Stand der Technik in der Seitenansicht
Figur 1 b:
   Winkelschaft gemäß dem Stand der Technik im Schnitt
Figur 2a:
   einen Mitnehmerbolzen in einem Winkelstück (Winkelschaftaufnahme) nach dem Stand der Technik in der Seitenansicht
Figur 2b:
   einen Mitnehmerbolzen in einem Winkelstück (Winkelschaftaufnahme) nach dem Stand der Technik im Schnitt
Figur 3a und 3b:
   Verbindung des Winkelschafts und des Winkelstücks mit einem Mitnehmerbolzen nach dem Stand der Technik im Schnitt
Figur 4a bis 4 d:
   einen Mitnehmerbolzen in einem Winkelstück gemäß der Erfindung im Schnitt
Figur 5a und 5b:
   Verbindung des Winkelschafts und des Winkelstücks mit einem Mitnehmerbolzen gemäß der Erfindung im Schnitt

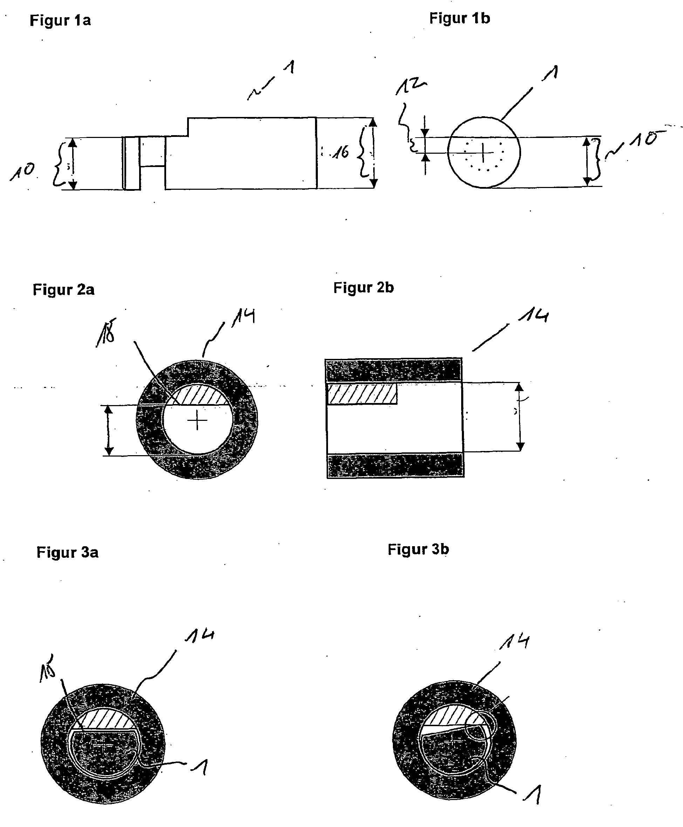

Figur 1 a zeigt einen Winkelschaft 1, wie er für rotierende Instrumente vorgesehen ist. Zu erkennen ist eine Fläche 10, die für die Kraftübertragung genutzt wird. Die Fläche 10 hat eine Höhe von ca. 1,8 mm. Um eine ideale Kraftübertragung zu erreichen und eine Verwendung in Normgeräten zu ermöglichen, ist der Winkelschaft 1 derart ausgestaltet, dass der Durchmesser 16 des Winkelschafts 1 gesamt ca. 2,35 mm beträgt. Wie in Figur 1b dargestellt beträgt der Abstand 12 zwischen dem Mittelpunkt der Fläche 10 und dem äußeren Rand an der kleinsten Stelle 0,625 mm.

Figur 2a zeigt einen Mitnehmerbolzen 18 in einem Winkelstück 14, in welchen der Winkelschaft 1 einbringbar ist. Der Mitnehmerbolzen 18 ist dabei als Gegenstück zu dem Winkelschaft 1 und dessen Fläche 10 ausgebildet und hat naturgemäß eine Spielpassung, so dass ein Luftspalt zwischen den beiden Flächen entsteht. Je größer das Spiel ist, umso leichter lässt sich das Instrument einstecken, jedoch ist die Neigung zum Klemmen größer. Nicht abgebildet ist eine Arretierung, die den Winkelschaft 1 in dem Winkelstück 14 in seiner Position hält. Die Kante des Mitnehmerbolzens 18 zum Winkelschaft liegend ist gerade ausgebildet.

Figur 3a zeigt die Verbindung des Winkelschafts 1 und des Winkelstücks 14 mit einem Mitnehmerbolzen 18 nach dem Stand der Technik im Schnitt im unbelasteten Zustand. Dabei liegt die Kante von 18 gerade und mit ihrer gesamten Fläche an dem Winkelschaft 1 und dessen Fläche 10 an. Dabei ist in Figur 3b die typische linienförmige Kontaktierung unter Last, die zur Schädigung am Außenrand des Winkelschaftes 1 führen kann, dargestellt.

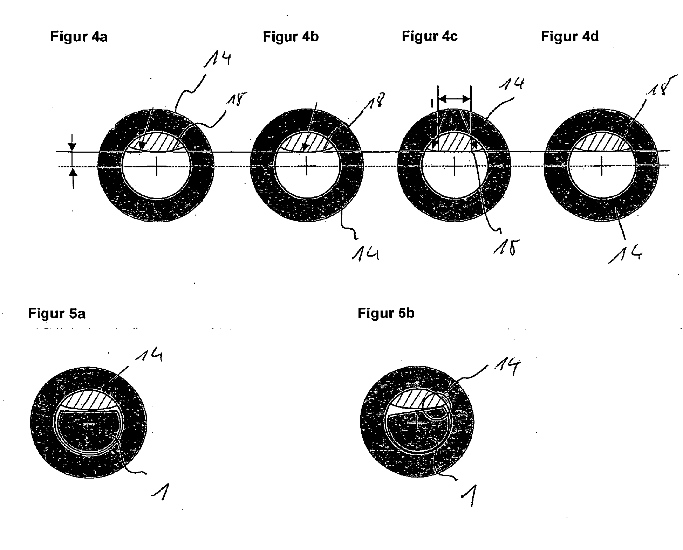

Figur 4a bis Figur 4d zeigen einen Mitnehmerbolzen 18 in einem Winkelstück 14 gemäß der Erfindung im Schnitt. Abgebildet sind mehrere Möglichkeiten zur Gestaltung einer Geometrie des Mitnehmerbolzens, so dass die Kontaktfläche zum Winkelschaft 1 und dessen Fläche 10 des Instrumentes immer in einer flächigen Kontaktstelle ausgebildet wird. Der Abstand 12 zwischen dem Mittelpunkt der Fläche 10 und dem äußeren Rand beträgt etwa 0,625 mm. Es ist deutlich erkennbar, dass die Kante des Mitnehmerbolzens 18 in dem Winkelstück 14 leicht gekrümmt ist. Durch diese Krümmung der Kante wird die gute Haltbarkeit und Stabilität des dentalen Instruments erreicht, da diese Krümmung ermöglicht, dass sich der flächige Kontakt winkelunabhängig ausbilden kann. Es kommt immer zu einem flächigen Kontakt ohne Linienberührung. Dabei kann die Krümmung der Kante an dem Mitnehmerbolzen 18 verschiedene Stärken der Krümmung aufweisen und gegebenenfalls Abschnitte aufweisen, die sogar gerade sind, wie beispielsweise in Figur 4d dargestellt.

In Figur 5a ist eine unbelastete Verbindung des Winkelschafts 1 und des Winkelstücks 14 mit einem Mitnehmerbolzen 18 gemäß der Erfindung im Schnitt dargestellt. Es ist eine erfindungsgemäße Ausführungsform gezeigt, bei der eine flächige Kraftübertragung mit Hilfe eines konstanten Radius erfolgt. In Figur 5b ist die flächige Berührung dargestellt, die auf einem Kontakt zwischen der Fläche des Winkelschaftes 1 und der Krümmung des Mitnehmerbolzens 18 unter Torsionslast gebildet wird.

## Patentansprüche

1. Dentale Winkelschaftaufnahme zum Betrieb von dentalen, rotierenden Instrumenten mit Winkelschaft 1, wobei die Winkelschaftaufnahme einen Mitnehmerbolzen aufweist und wobei der Mitnehmerbolzen der Winkelschaftaufnahme bei Betrieb durch einen flächigen Kontakt mit dem Winkelschaft 1 des dentalen Instrumentes verbunden ist, **dadurch gekennzeichnet, dass** der flächige Kontakt, der durch den Mitnehmer der Winkelschaftaufnahme mit dem Winkelschaft gebildet wird, im hookschen Bereich liegt.

2. Vorrichtung nach Anspruch 1, **dadurch gekennzeichnet, dass** die Winkelschaftaufnahme für den Betrieb des rotierenden Instrumentes mit Winkelschaft motorisch und/oder auch manuell betreibbar ist.

3. Vorrichtung nach einem oder mehreren der vorherstehenden Ansprüche, **dadurch gekennzeichnet, dass** der Mitnehmerbolzen an der kraftübertragenden Fläche einen konstanten Radius besitzt.

4. Vorrichtung nach einem oder mehreren der vorherstehenden Ansprüche, **dadurch gekennzeichnet, dass** der Mitnehmerbolzen an der kraftübertragenden Fläche einen variablen Radius besitzt.

5. Vorrichtung nach einem oder mehreren der vorherstehenden Ansprüche, **dadurch gekennzeichnet, dass** der Mitnehmerbolzen an der kraftübertragenden Fläche eine Kombination aus Flächen und Radien variabler Art aufweist.

6. Vorrichtung nach einem oder mehreren der vorherstehenden Ansprüche, **dadurch gekennzeichnet, dass** an der Gegenseite zum Mitnehmerbolzen ein abstützendes Gegenlager in der Winkelschaftaufnahme vorhanden ist.
